(19) Europäisches Patentamt
European Patent Office
Office européen des brevets

(11) Numéro de publication : **0 446 156 A1**

# (12) DEMANDE DE BREVET EUROPEEN

(21) Numéro de dépôt : **91420078.7**

(51) Int. Cl.$^5$ : **C08G 18/10,** C08G 18/42

(22) Date de dépôt : **05.03.91**

(30) Priorité : **08.03.90 FR 9003220**

(43) Date de publication de la demande :
**11.09.91 Bulletin 91/37**

(84) Etats contractants désignés :
**AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Jorda, Rafael**
**30, rue Claude Jusseaud**
**F-69110 Sainte-Foy-les-Lyon (FR)**
Inventeur : **Porte, Hugues**
**6, Chemin de Crépieux**
**F-69300 Caluire (FR)**
Inventeur : **Torres, Ghislaine**
**104, rue Ney**
**F-69006 Lyon (FR)**

(74) Mandataire : **Trolliet, Maurice et al**
**RHONE-POULENC CHIMIE, Direction des Brevets, Centre de Recherches des Carrières, BP 62**
**F-69192 Saint-Fons Cédex (FR)**

## (54) Coréticulat polyester-silicone dégradable par hydrolyse.

(57) La présente invention concerne un coréticulat polyester-silicone dégradable par hydrolyse qui est le produit de réaction :

a) - d'au moins un diorganopolysiloxane présentant par molécule des fonctions hydroxyle liées chacune aux atomes de silicium par une liaison Si-C,

b) - un oligomère polyester polylactique et/ou polyglycolique α,ω-diol,

c) - un polyisocyanate organique.

Les coréticulats selon l'invention sont en particulier utilisables comme matrice contenant un principe actif en vue de la libération contrôlée du principe actif par simple érosion par hydrolyse de cette matrice.

EP 0 446 156 A1

# CORETICULAT POLYESTER-SILICONE DEGRADABLE PAR HYDROLYSE

La présente invention concerne un coréticulat polyester-silicone, son procédé de préparation et son utilisation comme matrice contenant un principe actif en vue de la libération contrôlée du principe actif par simple érosion par hydrolyse de cette matrice et/ou par diffusion du principe actif à travers la matrice avant ou durant son érosion.

Dans ce type de système à libération contrôlée, la libération du principe actif qui est une substance minérale, organique, biochimique ou végétale, est fonction de la nature du principe actif, de la matrice et du caractère érodable de la matrice qui déterminent le profil de libération du principe actif.

Les polymères biodégradables et en particulier dégradables par hydrolyse déjà décrits dans la littérature sont principalement des polyéthylènes cyanoesters, des polyamides, des polyuréthannes, des polyacétates, des polylactones, des polyanhydrides, des polyorthoesters et des polyesters.

Les polymères silicones sont utilisés depuis longtemps, sous forme réticulée, comme matrice à l'intérieur de laquelle est dispersé le principe actif.

Il existe de très nombreux brevets décrivant des systèmes matriciels (par exemple US-A-4 053 580 et FR-A-2 560 768).

Dans ce type d'application les silicones ne sont pas dégradables par hydrolyse et ne sont donc pas érodables.

En outre dans les applications pharmaceutiques et biologiques, le caractère biocompatible du polymère a une importance fondamentale.

Pour ces applications il est très difficile, parfois impossible, d'éliminer hors du polymère silicone réticule des produits indésirables tels que catalyseurs et polymères silicones résiduels non intégrés au réticulat. Enfin l'utilisation de silicone reticulé non dégradable interdit généralement la libération d'un principe actif macromoléculaire.

L'utilisation de polyesters dégradables du type polylactique, polyglycolique et leurs copolymères a été tout d'abord décrite pour la réalisation de fils de suture chirurgicale biodégradables (US-A-2 703 316, US-A-2 758 987 et FR-A-1 425 333).

Ces polyesters ont été décrits également comme matrice pour la libération contrôlée de principe actif (EP-A-171 907, US-A-4 011 312 et US-A-4 273 920).

Pour les applications de libération contrôlée les polyesters dégradables présentent des avantages importants :

– ils sont non toxiques ainsi que leurs produits de dégradation engendrés par l'hydrolyse,

– on peut adapter dans une certaine mesure la durée, le profil de libération du principe actif, la cinétique d'hydrolyse du polymère, notamment par le choix des monomères de départ, par la longueur de la chaîne, sa cristallinité, etc .....,

Ils présentent toutefois une température de transition vitreuse trop élevée pour permettre la diffusion d'un grand nombre de principes actifs.

Ils nécessitent souvent des températures de mise en oeuvre élevées qui peuvent être incompatibles avec la stabilité thermique d'un grand nombre de principes actifs.

Le but de la présente invention est de proposer un coréticulat polyester-silicone au moins partiellement dégradable par hydrolyse, érodable, pouvant présenter des propriétés mécaniques suffisantes et de mise en forme aisée.

Un autre but de la présente invention est de proposer un coréticulat polyester-silicone qui présente à la fois les propriétés avantageuses des silicones et des polyesters dégradables sans en présenter les inconvénients, ou tout au moins, sous une forme très atténuée.

Ce but est atteint par la présente invention qui concerne en effet un coréticulat polyester-silicone au moins partiellement dégradable par hydrolyse qui est le produit de réaction :

a) - d'au moins un diorganopolysiloxane présentant par molécule au moins 2 fonctions hydroxyle liées chacune aux atomes de silicium par l'intermédiaire d'un radical organique divalent attaché d'une part à la fonction hydroxyle et d'autre part à l'atome de silicium par une liaison Si-C,

b) - un oligomère polyester de départ répondant à la formule générale moyenne :

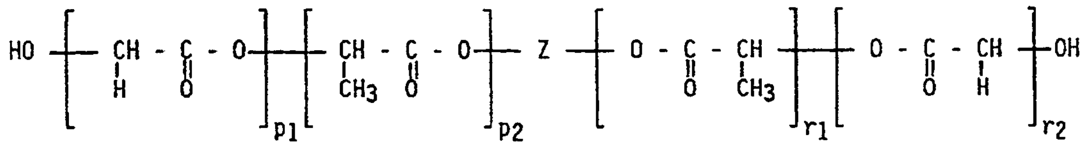 (1)

dans laquelle

– $p_1$, $p_2$, $r_1$ et $r_2$ sont des nombres entiers ou fractionnaires compris entre 0 et 10 000 inclus avec :

$r_1 + r_2 + p_1 + p_2$ supérieur à 1 et inférieur à 10 000, de préférence compris entre 10 et 200 inclus ;

– Z est un radical hydrocarboné, divalent de formule

$$- CH_2 - W - CH_2 -$$

dans laquelle W est un radical hydrocarboné, saturé ou insaturé, divalent linéaire, ramifié ou cyclique ayant de 1 à 8 atomes de carbone, ou bien symbolise une liaison covalente. A l'intérieur du segment polyester de formule (1) les séquences lactique et glycolique peuvent être distribuées de façon statistique, alternée ou à blocs ; W est donc une simple liaison covalente, ou un chaînon alkylène ou cycloalkylène comme par exemple :

$- CH_2 -$, $- (CH_2)_2 -$, $- CH(CH_3) -$, 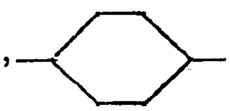 ;

c) - un polyisocyanate organique.

Parmi les polyisocyanates organiques on utilise de préférence un diisocyanate organique de formule :

$$O = C = N - B - N = C = O \qquad (2)$$

dans laquelle B est un radical organique hydrocarboné divalent comportant de 3 à 30 atomes de carbone inclus, de préférence de 4 à 20 atomes de carbone inclus.

Comme diorganopolysiloxane a) on recommande d'utiliser ceux de formule moyenne :

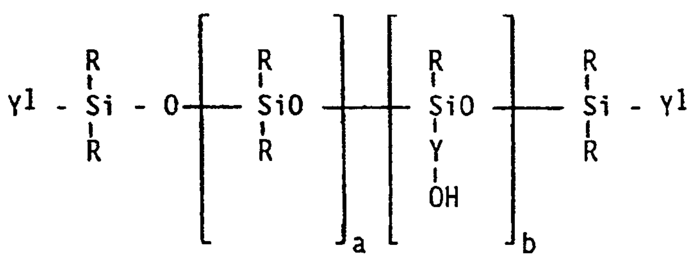 (3)

dans laquelle :

– les radicaux R, identiques ou différents, sont des radicaux organiques monovalents. Ils sont choisis de préférence parmi les radicaux alkyle en $C_1$-$C_6$, phényle, vinyle et trifluoro-3,3,3 propyle ;

– les motifs diorganosiloxyle préférés de par leur disponibilité industrielle sont les motifs diméthylsiloxy, méthylphénylsiloxy, diphénylsiloxy et méthylvinylsiloxy ;

– les symboles Y, identiques ou différents, représentent un radical organique divalent relié à l'atome de silicium par une liaison SiC ; de préférence, le chaînon Y représente un chaînon alkylène linéaire ou ramifié en $C_1$-$C_{18}$ inclusivement, éventuellement prolongé par un chaînon polyéther choisi parmi le polyoxyde d'éthylène, le polyoxyde de propylène et leurs mélanges et comportant de 1 à 50, de préférence de 5 à 30 motifs oxyde d'éthylène et/ou oxyde de propylène ; comme exemples de chaînons Y, on peut citer :

$$- CH_2 -, -(CH_2)_2 -, -(CH_2)_3-, \left( OCH_2 - CH_2 \right)_{29}, -(CH_2)_3-,$$

$$- (CH_2)_3-\left[ O - CH_2 - CH(CH_3) \right]_{15}-, -(CH_2)_3 - O -(CH_2 - CH_2)-,$$

$$- (CH_2) - CH(CH_3) - CH_2 -, -(CH_2)_{12}- ;$$

– $Y^1$ représente Y - OH ou R ;

– a est un nombre entier ou fractionnaire compris entre 0 et 1 000, de préférence entre 5 et 200 ;

– b est un nombre entier ou fractionnaire compris entre 0 et 50, de préférence entre 3 et 20, sous réserve que le nombre total de groupe hydroxyle en bout de chaîne et dans la chaîne soit au moins égal à 2 dans le cas où le polyisocyanate c) a au moins 3 fonctions isocyanate par molécule, et au moins égal à 3 dans le cas préféré où le polyisocyanate est un diisocyanate.

Ainsi:

– si b = 0 les 2 $Y^1$ représentent nécessairement Y - OH et le polyisocyanate présente au moins 3 fonctions isocyanate par molécule,

– si b = 1 et si 1 seul $Y^1$ représente Y - OH, le polyisocyanate présente au moins 3 fonctions isocyanate par molécule,

– si b = 1 et si les 2 $Y^1$ représentent Y - OH, le polyisocyanate peut être un diisocyanate,

– si b = 2 et si les 2 $Y^1$ représentent le radical R, le polyisocyanate présente au moins 3 fonctions isocyanate par molécule,

– si b = 2 et 1 $Y^1$ représente Y - OH, le polyisocyanate peut être un diisocyanate.

– si b $\geqq$ 3 quelle que soit la signification de $Y^1$, le polyisocyanate peut être un diisocyante.

Les produits de formule (3) sont des produits connus dont certains sont disponibles dans le commerce. On peut les préparer en particulier par réaction d'hydrosilylation de l'organohydrogénopolysiloxane correspondant sur un alcool à insaturation oléfinique. Parmi ces alcools on utilise plus particulièrement l'alcool allylique et méthallylique en utilisant un catalyseur d'hydrosilylation au platine conformément à l'enseignement des brevets américains US-A-2 970 150 et US-A-4 160 775.

Les procédés d'obtention du polyester de formule (1) sont de deux types : par polycondensation ou par polymérisation par ouverture de cycle.

Les procédés de ce type sont décrits dans les brevets US-A-2 676 945, US-A-4 273 920, FR-A-1 425 333, FR-A-2 086 047, EP-A-171 907 et EP-A-172 636.

Selon le procédé de polycondensation on place l'acide lactique, l'acide glycolique ou un mélange des deux monomères dans un réacteur fermé en présence du diol de formule HO - $CH_2$ - W - $CH_2$ - OH.

On effectue la polycondensation, de préférence sans catalyseur en augmentant la température et en diminuant la pression simultanément. Le temps de réaction peut aller par exemple de 5 à 120 heures ; on peut faire passer la température de 20 à 220 °C et abaisser simultanément la pression de la pression atmosphérique à 0,02 KPa ou moins.

Selon le procédé de polymérisation recommandé dans le cadre de la présente invention, on utilise des dimères cycliques des acides lactiques ou glycoliques nommés lactides ou glycolides ou leurs mélanges en présence du diol.

Le lactide utilisé peut être du lactide L(-) optiquement pur ou du lactide DL racémique.

Ceci conditionne la stéréorégularité du polylactide obtenu. Ainsi dans le cas du lactide L(-) on obtient un polymère semi-cristallin, alors qu'avec du lactide DL, on obtient un polymère amorphe.

On effectue la polymérisation en masse ou en solution en présence d'un catalyseur.

Les conditions de durée de réaction, de température et de pression sont les suivantes :

– temps de réaction compris entre 3 et 120 heures,

– température comprise entre 110 et 180 °C et,

– pression inférieure à 0,5 KPa pour la polymérisation en masse.

Les caractéristiques de poids moléculaire, de polydispersité et de cristallinité du polymère obtenu selon l'un ou l'autre procédé, sont contrôlées par les conditions expérimentales et la composition des monomères de départ.

Comme polyisocyanate c) on peut donc utiliser un polyisocyanate ayant plus de 3 groupes isocyanates par molécule et, dans ce cas, le diorganopolysiloxane a) peut ne présenter que 2 fonctions hydroxyle par molécule.

Comme polyisocyanate de ce type on peut en particulier utiliser :

– le polyméthylène poly(phénylisocyanate) de formule:

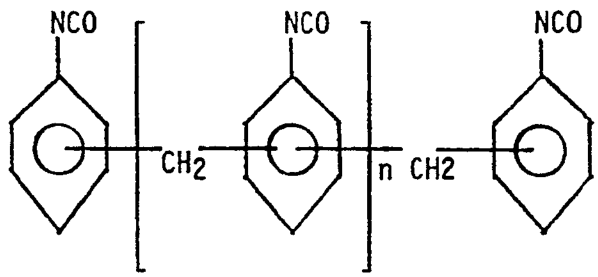

où n est un nombre entier au moins égal à 1,

– des condensats de l'hexaméthylène diisocyanate qui peuvent être du type biuret ou trimère (isocyanurate) et qui peuvent être représentés par les formules :

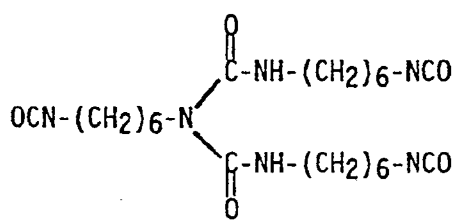

BIURET

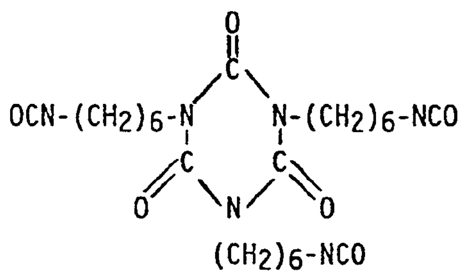

TRIMERE ou "ISOCYANURATE"

Comme composés diisocyanate de formule (2) on peut en particulier utiliser :

– le diisocyanato-1,2 propane,
– le diisocyanato-1,2 butane,
– le diisocyanato-1,3 butane,
– le diisocyanato-1,6 hexane,
– le diisocyanato-1,3 benzène,
– le diisocyanato-1,4 benzène,
– le diisocyanato-2,4 toluène,
– le diisocyanato-2,6 toluène,
– le diisocyanato-2,4 xylène,
– le diisocyanato-2,6 xylène,
– le diisocyanato-3,3' biphényle,
– le diisocyanato-4,4' biphényle,
– le diisocyanato-3,3' diphénylméthane,
– le diisocyanato-4,4' diphénylméthane,
– le diisocyanato-4,4' diméthyl-3,3' diphényle,
– le diisocyanato-4,4' diméthyl-3,3' diphénylméthane,
– le diisocyanato-4,4' diphényléthane,
– le diisocyanato-3,3' diphényléther,
– le diisocyanato-4,4' diphényléther,
– le diisocyanato-3,3' diphénylsulfone,
– le diisocyanato-4,4' diphénylsulfone,
– le diisocyanato-3,3' benzophénone,

– le diisocyanato-4,4′ benzophénone,
– le diisocyanato-3,3′ dicyclohexylméthane,
– le diisocyanato-4,4′ dicyclohexylméthane,
– le diisocyanato-1,5 naphtalène,
– le diisocyanato-4,4′ dichloro-3,3 biphényle,
– le diisocyanato-4,4′ diméthoxy-3,3′ biphényle

Les diisocyanates utilisés préférentiellement sont les suivants :
– le diisocyanato-1,6 hexane,
– le diisocyanato 2,4 toluène,
– le diisocyanato-2,6 toluène,
– le diisocyanato-2,4 xylène,
– le diisocyanato-4,4′ biphényle,
– le diisocyanato-4,4′ diphénylméthane,
– le diisocyanato-4,4′ diphényléther,
– le diisocyanato-4,4′ diphénylsulfone,
– le diisocyanato-4,4′ benzophénone,
– le diisocyanato-4,4′ dicyclohexyléthane,
– le diisocyanato-1,5 naphtalène.

Dans le cas où l'on utilise comme polyisocyanate c) un diisocyanate, le diorganopolysiloxane a) doit présenter au moins 3 fonctions hydroxyles par molécule.

Pour préparer le coréticulat de l'invention il est recommandé d'opérer en deux étapes. Selon une première étape, on fait réagir le polyester de formule (1) sur tout ou partie du polyisocyanate au sein d'un solvant organique tel que l'orthodichlorobenzène et d'éliminer éventuellement le polyisocyanate en excès. Le produit de réaction est au cours d'une deuxième étape mis à réagir avec le diorganopolysiloxane à fonction hydroxyle et le reste de polyisocyanate.

Les deux étapes peuvent être mises en oeuvre en présence d'un catalyseur catalysant la réaction NCO sur -OH. Ces catalyseurs comprennent les amines tertiaires, les composés organométalliques tels que l'oléate stanneux, le dilaurate de dibutylétain ; les bischélates d'étain tel que le bis(acétylacétonate)d'étain, l'octoate de zinc et le naphténate de cobalt.

De façon générale, il est souhaitable de faire réagir les constituants a), b) et c) selon des proportions déterminées.

Ainsi si A est le nombre de moles fonction hydroxyle de l'oligomère polyester b), A′ le nombre de moles de fonction hydroxyle du diorganopolysiloxane a) et B le nombre de moles de fonction isocyanate du polyisocyanate c) il est souhaitable que $\frac{A + A'}{B}$ soit compris entre 0,5 et 2.

En outre quand on met en oeuvre le procédé en deux étapes il est souhaitable qu'au cours de la première étape on fasse réagir b) sur c) en des quantités telles que A/B soit compris de 0,1 à 0,9 et, qu'au cours de la deuxième étape on ajoute a) de telle sorte que $\frac{A + A'}{B}$ soit compris entre 0,5 et 2.

Dans le cas où le polyisocyanate est un diisocyanate il est souhaitable que $\frac{A + A'}{B}$ soit proche de 1, que au cours de la première étape A/B soit compris entre 0,4 et 0,6 et que, au cours de la deuxième étape $\frac{A + A'}{B}$ soit compris entre 0,9 et 1,1.

Selon un premier mode de réalisation préféré on fait réagir au cours de la première étape le polyester sur le polyisocyanate à une température comprise entre 40 et 90 °C, de préférence aux environs de 60 °C pendant une durée comprise entre 1 et 10 heures. Au cours de la deuxième étape, on additionne dans le réacteur en présence d'un solvant organique, le polydiorganosiloxane, à une température comprise entre 90 et 110 °C.

Selon un deuxième mode de réalisation préféré, on fait réagir au cours de la première étape un excès molaire de diisocyanate entre 50 et 110 °C et, en fin de réaction on élimine le diisocyanate en excès par tout moyen adapté, par exemple par évaporation au moyen d'un évaporateur à film agité.

Lors de la deuxième étape on ajoute au polyester bis(α,ω-isocyanate), le polysiloxane à une température comprise entre 90 et 150 °C.

Les coréticulats selon l'invention sont au moins partiellement dégradables par hydrolyse et peuvent constituer tout ou partie d'objets au moins partiellement dégradables par hydrolyse.

Ils présentent des propriétés mécaniques suffisantes pour être formés sous forme d'objets dégradables par hydrolyse de formes quelconques contenant un principe actif, à une teneur généralement comprise entre 0,1 et 40 % en poids, qui peut être un médicament, un produit phytosanitaire, un embryon végétal, une

semence, un catalyseur, un parfum, un produit cosmétique, etc .....

Les coréticulats selon l'invention présentent donc des propriétés mécaniques suffisantes pour des applications en libération contrôlée. Ils peuvent être utilisés pour la libération contrôlée de principes actifs macromoléculaires, ce qui n'est généralement pas possible au moyen de simples polymères silicones.

Les exemples suivants illustrent l'invention.

- EXEMPLE 1 :

1.a. - Préparation d'un polyester de formule :

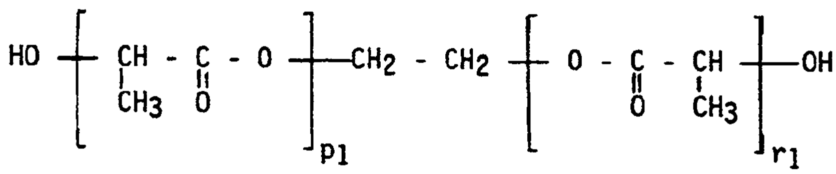

On charge dans un réacteur de 1 litre, 291 g de lactide L(-) fraîchement recristallisé dans l'acétate d'éthyle, 8,2 ml d'éthylèneglycol distillé sous vide et 0,510 g d'octanoate d'étain. On établit un vide inférieur à 0,5 KPa dans le réacteur puis on chauffe à 120 °C pendant 48 heures.

Après refroidissement, le produit réactionnel est dissout dans 500 ml de $CH_2Cl_2$ puis purifié en coulant cette solution dans de l'eau à 65 °C sous forte agitation. Après évaporation du solvant, on récupère 268 g de polymère séché sous vide présentant les caractéristiques suivantes :

– Tg : 30 °C,
– Tm : 78 °C,
– Mn : 2 010,
– Teneur en fonction OH : 0,97 équivalent par Kg.

1.b. - Préparation du coréticulat : on introduit dans un réacteur de 250 ml, 3,5 g d'un mélange pondéral 80 % et 20 % de toluène diisocyanate de formule :

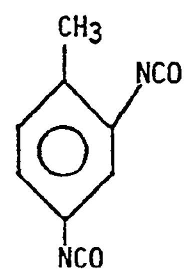

et

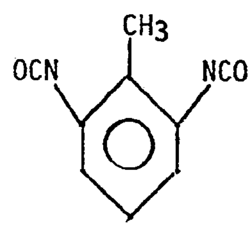

80 %

20 %

10 ml d'orthodichlorobenzène et 12 µl de dilaurate de dibutylétain.

On prépare dans une ampoule de coulée une solution contenant 80 ml d'orthodichlorobenzène et 21 g du polyester préparé à l'exemple 1.a. On coule lentement cette solution dans le réacteur à 30 °C sous agitation pendant 1 heure 15 minutes. Ensuite on chauffe le mélange réactionnel pendant 6 heures à 60 °C sous agitation.

On ajoute de nouveau 12 µl de dilaurate de dibutylétain et on coule dans le réacteur 11,8 g d'huile de formule :

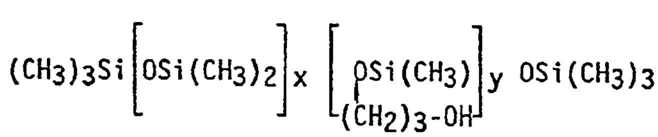

avec x = 21,6 et Y = 4.

On élève progressivement pendant 30 minutes la température du mélange jusqu'à 130 °C. On évapore le solvant sous une pression réduite de 0,133 KPa et on achève la réticulation à cette même température sous

la même pression réduite pendant 15 heures.

On laisse refroidir et on récupère un produit solide, dur qui est le réticulat polyester-silicone.

Le rendement massique est supérieur à 90 %.

Le taux de gonflement est de 2,77.

- EXEMPLE 2 :

On répète exactement le mode opératoire de l'exemple 1, sauf qu'on ajoute 46,1 g d'huile polydiméthylsiloxane pour laquelle : $x = 150$ et $y = 3{,}25$.

Le réticulat solide obtenu est un élastomère.

Rendement massique > 90 %

Taux de gonflement : 6,1

## Revendications

**1.** - Coréticulat polyester-silicone au moins partiellement dégradable par hydrolyse, caractérisé en ce qu'il est le produit de réaction :

a) - d'au moins un diorganopolysiloxane présentant par molécule au moins 2 fonctions hydroxyle liées chacune aux atomes de silicium par l'intermédiaire d'un radical organique divalent attaché d'une part à la fonction hydroxyle et d'autre part à l'atome de silicium par une liaison Si-C,

b) - un oligomère polyester de départ répondant à la formule générale moyenne :

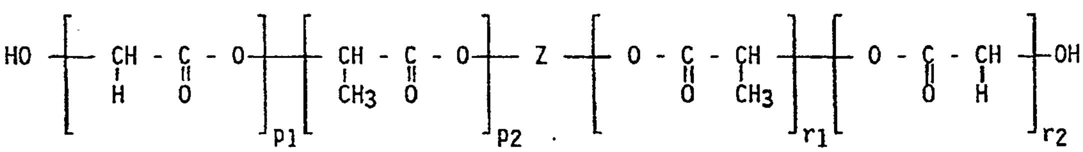 (1)

dans laquelle

– $p_1$, $p_2$, $r_1$ et $r_2$ sont des nombres entiers ou fractionnaires compris entre 0 et 10 000 inclus avec :

$r_1 + r_2 + p_1 + p_2$ supérieur à 1 et inférieur à 10 000, de préférence compris entre 10 et 200 inclus ;

– Z est un radical hydrocarboné, divalent de formule :

$$- CH_2 - W - CH_2 -$$

dans laquelle W est un radical hydrocarboné, saturé ou insaturé, divalent linéaire, ramifié ou cyclique ayant de 1 à 8 atomes de carbone, ou bien symbolise une liaison covalente ;

c) - un polyisocyanate organique sous réserve que si le polyisocyanate est un diisocyanate, le diorganopolysiloxane a) présente au moins 3 fonctions hydroxyle par molécule.

**2.** - Coréticulat selon la revendication 1, caractérisé en ce que le polyisocyanate est un diisocyanate organique de formule :

$$O = C = N - B - N = C = O \qquad (2)$$

dans laquelle B est un radical organique hydrocarboné divalent comportant de 3 à 30 atomes de carbone inclus, de préférence de 4 à 20 atomes de carbone inclus.

**3.** - Coréticulat selon la revendication 1, caractérisé en ce que l'on utilise comme diorganopolysiloxane a) ceux de formule moyenne :

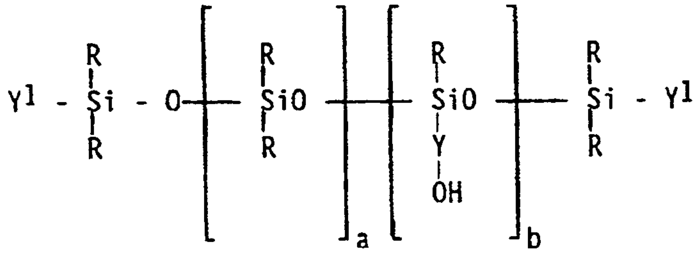 (3)

dans laquelle

– les radicaux R, identiques ou différents, sont des radicaux organiques monovalents ;

– les symboles Y, identiques ou différents, représentent un radical organique divalent relié à l'atome de silicium par une liaison SiC ;

– $Y^1$ représente Y - OH ou R ;

– a est un nombre entier ou fractionnaire compris entre 0 et 1 000, de préférence entre 5 et 200 ;

– b est un nombre entier ou fractionnaire compris entre 0 et 50, de préférence entre 3 et 20, sous réserve que le nombre total de groupe hydroxyle en bout de chaîne et dans la chaîne soit au moins égal à 2 dans le cas où le polyisocyanate c) a au moins 3 fonctions isocyanates par molécule et au moins égal à 3 dans le cas où le polyisocyanate est un diisocyanate.

**4.** - Objets au moins partiellement dégradables par hydrolyse, caractérisés en ce qu'ils sont constitués au moins en partie par un copolymère tel que défini à la revendication 1, 2 ou 3.

**5.** - Objets au moins partiellement dégradables par hydrolyse selon la revendication 4 comportant en outre un principe actif.

Office européen des brevets

# RAPPORT DE RECHERCHE EUROPEENNE

Numero de la demande

EP 91 42 0078

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 165 849 (RHONE-POULENC)<br>* Page 2, ligne 25 - page 7, ligne 11; revendications 1-4 * | 1-5 | C 08 G 18/10<br>C 08 G 18/42 |
| A | FR-A-2 168 221 (PECHINEY-UGINE KUHLMANN)<br>* Page 2, ligne 5 - page 4, ligne 16; revendications 1-3 * | 1 | |
| A | CHEMICAL ABSTRACTS, vol. 68, no. 24, 1968, page 10229, résumé no. 105798y, Columbus, Ohio, US; & JP-A-43 2949 (DAICELL CO., LTD) 02-02-1968<br>* Résumé * | 1 | |
| A | FR-A-2 016 738 (DESOTO) | 1 | |
| A | US-A-4 804 691 (ENGLISH et al.) | 1 | |
| D,A | US-A-4 011 312 (REUTER et al.) | 1 | |
| | | | DOMAINES TECHNIQUES RECHERCHES (Int. Cl.5) |
| | | | G 08 G |

Le présent rapport a été établi pour toutes les revendications

| Lieu de la recherche | Date d'achèvement de la recherche | Examinateur |
|---|---|---|
| LA HAYE | 06-06-1991 | BOURGONJE A.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)